# EUROPEAN PATENT SPECIFICATION

(11) **EP 3 672 313 B1**
(45) Date of publication and mention of the grant of the patent: **15.10.2025**
(21) Application number: 18847062.9
(22) Date of filing: 27.07.2018
(51) Int. Cl.: H04W 24/00

(54) **METHOD FOR CONFIGURING DURATION OF WAKE-UP SIGNAL, ACQUISITION METHOD, NETWORK DEVICE, AND TERMINAL**
VERFAHREN ZUR KONFIGURIERUNG DER DAUER EINES AUFWECKSIGNALS, ERFASSUNGSVERFAHREN, NETZWERKVORRICHTUNG UND ENDGERÄT
PROCÉDÉ DE CONFIGURATION DE DURÉE DE SIGNAL DE RÉVEIL, PROCÉDÉ D'ACQUISITION, DISPOSITIF DE RÉSEAU ET TERMINAL

(30) Priority: 18.08.2017 CN 201710713348
(43) Date of publication of application: 24.06.2020
(73) Proprietor: China Mobile Communication Co., Ltd Research Institute, Beijing 100053 (CN); China Mobile Communications Group Co., Ltd, Beijing 100032 (CN)
(72) Inventor: TONG, Hui, Beijing 100032 (CN); YANG, Guang, Beijing 100032 (CN)
(74) Representative: GPI Brevets
(86) International application number: PCT/CN2018/097377
(87) International publication number: WO 2019/033916

(56) References cited:
- EP-A1- 3 625 997
- EP-A1- 3 729 875
- EP-A1- 3 759 848
- EP-B1- 3 625 997
- EP-B1- 3 729 875
- EP-B1- 3 759 848
- CN-A- 101 946 538
- CN-A- 103 052 091
- CN-A- 105 554 863
- US-A1- 2004 176 147
- US-A1- 2010 120 476
- US-A1- 2017 202 011

## Description

### TECHNICAL FIELD

The present disclosure relates to the field of communication technology, in particular to a wake-up signal (WUS) duration configuration method, a WUS monitoring method, a network device, and a User Equipment (UE).

### BACKGROUND

For Internet of Things (IoT) services, a very long stand-by time is required, e.g., two AA batteries are provided so as to enable a UE to be in a standby mode for ten years. As speculated in a conventional Narrow Band-IoT (NB-IoT) standard, the UE may enter a long-term Discontinuous reception (DRX) state, so as to save energy. However, when the UE is in an energy-saving state, its delay for responding to a paging from a base station may increase. For some applications, e.g., bicycle-sharing applications, the user experience may be seriously adversely affected due to an increase in the delay.

In order to optimize the power consumption for the UE in the case of rapidly responding to the paging from the base station, such a concept as lightweight paging has been proposed in relevant standards, i.e., a lightweight signal (a WUS) is added before the detection of a paging signal. The UE may detect the paging signal subsequently only when the WUS has been detected. A relatively small volume of information is carried in the WUS, so it is able for the WUS to cover a cell merely through transmitting the WUS at few repetition times. In addition, when the UE is in an idle state, actually no paging message is transmitted at most of paging occasions. Hence, through the introduction of the WUS, it is able to remarkably reduce the power consumption for the UE.

The WUS needs to cover the entire cell, so it needs to be repeated several times. One mode includes directly configuring the repetition times (i.e., time-domain resources) for the WUS, which, however, results in a certain signaling overhead.

US20170202011A1 discloses a method for limiting wideband station communication of wireless local area networks and Wi-Fi networks. US20100120476A1 discloses a base station for wireless communication working at two distinct operating states. The document EP3625997 was cited.

### SUMMARY

An object of the present disclosure is to provide a WUS duration configuration method as per claims 1-6, a network device as per claim 7, a WUS monitoring method as per claims 8-14, and a UE as per claim 15, so as to associate information about a WUS duration with an existing coverage configuration, thereby to enable the UE in different coverage ranges to detect WUSs with different durations.

In one aspect, the present disclosure provides a WUS duration configuration method, including: generating configuration information including a duration of a WUS, the WUS being used to wake up an IoT UE, the duration being associated with one or more coverage parameters configured by a network device for the IoT UE; and transmitting the configuration information to the IoT UE.

In the present disclosure, the duration is linearly associated with the one or more coverage parameters configured by the network device for the IoT UE.

In some possible embodiments of the present disclosure, the duration is [A/M]+K, where [] represents a rounding operation including a rounding-up operation or a rounding-down operation, A represents the coverage parameter, K is equal to 0 or a predetermined value other than 0, M represents a predetermined constant.

In the present disclosure, the one or more coverage parameters include maximum number of repetitions of a physical downlink control channel for paging In the present disclosure the one or more coverage parameters comprise maximum number of repetitions of a control channel for transmitting Msg2 in a random access procedure, and/or maximum number of repetitions of a control channel for transmitting Msg4 in the random access procedure. In some possible embodiments the one or more coverage parameters include maximum number of repetitions of a data scheduling control channel

In some possible embodiments of the present disclosure, the transmitting the configuration information to the IoT UE includes transmitting the configuration information to the IoT UE through transmitting indication information to the IoT UE.

In some possible embodiments of the present disclosure, the WUS duration configuration method further includes configuring a time interval configuration value between a time point when the WUS duration is ended and a time point when the detection of a physical downlink control channel for paging is started for the IoT UE.

In some possible embodiments of the present disclosure, the configuring the time interval configuration value between the time point when the WUS duration is ended and the time point when the detection of the control channel for the paging signal is started for the IoT UE includes: configuring the time interval configuration value between the time point when the WUS duration is ended and the time point when the detection of the control channel for the paging signal is started for the IoT UE through a broadcast message from the network device; or configuring the time interval configuration value between the time point when the WUS duration is ended and the time point when the detection of the control channel for the paging signal is started for the IoT UE through transmitting indication information to the IoT UE, the indication information carrying the time interval configuration value for the IoT UE; or configuring the time interval configuration value between the time point when the WUS duration is ended and the time point when the detection of the control channel for the paging signal is started for the IoT UE in accordance with a preset time interval configuration value between the time point when the WUS duration is ended and the time point when the detection of the control channel for the paging signal is started.

In some possible embodiments of the present disclosure, the WUS duration configuration method further includes configuring a start time-domain resource position where the acquisition of the WUS is started or an end time-domain resource position where the WUS duration is ended for the IoT UE.

In some possible embodiments of the present disclosure, the configuring of the start time-domain resource position where the acquisition of the WUS is started or the end time-domain resource position where the WUS duration is ended for the IoT UE includes configuring the start time-domain resource position where the acquisition of the WUS is started or the end time-domain resource position where the WUS duration is ended for the IoT UE through the broadcast message from the network device or in a pre-configuration manner.

In another aspect, the present disclosure provides in some embodiments a network device, including: a processor configured to generate configuration information including a duration of a WUS, the WUS being used to wake up an IoT UE, the duration being associated with one or more coverage parameters configured by a network device for the IoT UE; and a transceiver configured to transmit the configuration information to the IoT UE.

In the present disclosure, the duration is linearly associated with the one or more coverage parameters configured by the network device for the IoT UE.

In some possible embodiments of the present disclosure, the duration is [A/M]+K, where [] represents a rounding operation including a rounding-up operation or a rounding-down operation, A represents the coverage parameter, K is equal to 0 or a predetermined value other than 0, M represents a predetermined constant.

In the present disclosure, the one or more coverage parameters include maximum number of repetitions of a physical downlink control channel for paging. In some possible embodiments the one or more coverage parameters include maximum number of repetitions of a data scheduling control channel, maximum number of repetitions of a control channel for transmitting Msg2 in a random access procedure, and/or maximum number of repetitions of a control channel for transmitting Msg4 in the random access procedure.

In some possible embodiments of the present disclosure, the transceiver is further configured to transmit the configuration information the IoT UE through transmitting indication information to the IoT UE.

In some possible embodiments of the present disclosure, the transceiver is further configured to configure a time interval configuration value between a time point when the WUS duration is ended and a time point when the detection of a physical downlink control channel for paging is started for the IoT UE.

In some possible embodiments of the present disclosure, the transceiver is further configured to: configure the time interval configuration value between the time point when the WUS duration is ended and the time point when the detection of the control channel for the paging signal is started for the IoT UE through a broadcast message from the network device; or configure the time interval configuration value between the time point when the WUS duration is ended and the time point when the detection of the control channel for the paging signal is started for the IoT UE through transmitting indication information to the IoT UE, the indication information carrying the time interval configuration value for the IoT UE; or configure the time interval configuration value between the time point when the WUS duration is ended and the time point when the detection of the control channel for the paging signal is started for the IoT UE in accordance with a preset time interval configuration value between the time point when the WUS duration is ended and the time point when the detection of the control channel for the paging signal is started.

In some possible embodiments of the present disclosure, the transceiver is further configured to configure a start time-domain resource position where the acquisition of the WUS is started or an end time-domain resource position where the WUS duration is ended for the IoT UE.

In some possible embodiments of the present disclosure, the transceiver is further configured to configure the start time-domain resource position where the acquisition of the WUS is started or the end time-domain resource position where the WUS duration is ended for the IoT UE through the broadcast message from the network device or in a pre-configuration manner.

In yet another aspect, the present disclosure provides in some embodiments a WUS monitoring method, including: receiving configuration information including a duration of a WUS from a network device, the WUS being used to wake up an Internet of Things, IoT, User Equipment, and the duration being associated with one or more coverage parameters configured by a network device for the IoT UE; and monitoring the WUS in accordance with the configuration information.

In the present disclosure, the duration is linearly associated with the one or more coverage parameters configured by the network device for the IoT UE.

In some possible embodiments of the present disclosure, the duration is [A/M]+K, where [] represents a rounding operation including a rounding-up operation or a rounding-down operation, A represents the coverage parameter, K is equal to 0 or a predetermined value other than 0, M represents a predetermined constant.

In the present disclosure, the one or more coverage parameters include maximum number of repetitions of a physical downlink control channel for paging. Embodiments of the one or more coverage parameters provide maximum number of repetitions of a data scheduling control channel, maximum number of repetitions of a control channel for transmitting Msg2 in a random access procedure, and/or maximum number of repetitions of a control channel for transmitting Msg4 in the random access procedure.

In some possible embodiments of the present disclosure, the receiving of the configuration information including the duration of the WUS from the network device includes acquiring the configuration information including the duration of the WUS through receiving indication information from the network device.

In some possible embodiments of the present disclosure, the WUS monitoring method further includes receiving a time interval configuration value between a time point when the WUS duration is ended and a time point when the detection of a physical downlink control channel for paging is started configured by the network device for the IoT UE.

In some possible embodiments, the receiving of the time interval configuration value between the time point when the WUS duration
is ended and the time point when the detection of the control channel for the paging signal is started configured by the network device for the IoT UE, includes receiving the time interval configuration value between the time point when the WUS duration is ended and the time point when the detection of the control channel for the paging signal is started configured for the IoT UE through receiving a broadcast message from the network device, or receiving indication information from the network device, or in accordance with a preset time interval configuration value between the time point when the WUS duration is ended and the time point when the detection of the control channel for the paging signal is started.

In some possible embodiments of the present disclosure, the WUS monitoring method further includes acquiring a start time-domain resource position where the acquisition of the WUS is started or an end time-domain resource position where the WUS duration is ended configured for the IoT UE.

In some possible embodiments of the present disclosure, the acquiring of the start time-domain resource position where the acquisition of the WUS is started or the end time-domain resource position where the WUS duration is ended configured for the IoT UE, includes acquiring the start time-domain resource position where the acquisition of the WUS is started or the end time-domain resource position where the WUS duration is ended configured for the IoT UE through the broadcast message from the network device or in a pre-configuration manner.

In some possible embodiments of the present disclosure, the WUS monitoring method further includes: monitoring the WUS from the start time-domain resource position; and/or stopping the acquisition of the WUS at the end time-domain resource position or at L symbols before the end time-domain resource position, where L is configured by the network device through broadcasting or preset.

In still yet another aspect, the present disclosure provides in some embodiments a claimed UE, the User Equipment including a transceiver configured to: receive configuration information including a duration of a WUS from a network device, the WUS being used to wake up an IoT UE, the duration being associated with one or more coverage
parameters configured by a network device for the IoT UE; and acquire the WUS in accordance with the configuration information.

In the present disclosure, the duration is linearly associated with the one or more coverage parameters configured by the network device for the IoT UE.

In some possible embodiments of the present disclosure, the duration is [A/M]+K, where [] represents a rounding operation including a rounding-up operation or a rounding-down operation, A represents the coverage parameter, K is equal to 0 or a predetermined value other than 0, M represents a predetermined constant.

In the present disclosure, the one or more coverage parameters include maximum number of repetitions of a physical downlink control channel for paging. Embodiments of the one or more coverage parameters include maximum number of repetitions of a data scheduling control channel, maximum number of repetitions of a control channel for transmitting Msg2 in a random access procedure, and/or maximum number of repetitions of a control channel for transmitting Msg4 in the random access procedure.

In some possible embodiments of the present disclosure, the transceiver is further configured to acquire the configuration information including the duration of the WUS through receiving indication information from the network device.

In some possible embodiments of the present disclosure, the transceiver is further configured to receive a time interval configuration value between a time point when the WUS duration is ended and a time point when the detection of a physical downlink control channel for paging is started configured by the network device for the IoT UE.

In some possible embodiments of the present disclosure, the transceiver is further configured to receive the time interval configuration value between the time point when the WUS duration is ended and the time point when the detection of the control channel for the paging signal is started configured for the IoT UE through receiving a broadcast message from the network device, or receiving indication information from the network device, or in accordance with a preset time interval configuration value between the time point when the WUS duration is ended and the time point when the detection of the control channel for the paging signal is started.

In some possible embodiments of the present disclosure, the transceiver is further configured to acquire a start time-domain resource position where the acquisition of the WUS is started or an end time-domain resource position where the WUS duration is ended configured for the IoT UE.

In some possible embodiments of the present disclosure, the transceiver is further configured to acquire the start time-domain resource position where the acquisition of the WUS is started or the end time-domain resource position where the WUS duration is ended configured for the IoT UE through the broadcast message from the network device or in a pre-configuration manner.

In some possible embodiments of the present disclosure, the transceiver is further configured to: acquire the WUS from the start time-domain resource position; and/or stop the acquisition of the WUS at the end time-domain resource position or at L symbols before the end time-domain resource position, where L is configured by the network device through broadcasting or preset.

In still yet another aspect, the present disclosure provides in some embodiments a communication device, including a processor and a memory storing therein a computer program. The processor is configured to execute the computer program so as to implement the above-mentioned WUS duration configuration method or WUS monitoring method.

In still yet another aspect, the present disclosure provides in some embodiments a computer-readable storage medium storing therein a computer program instruction. The computer program instruction is executed by a computer so as to implement the above-mentioned WUS duration configuration method or WUS monitoring method.

The present disclosure at least has the following beneficial effect. According to the embodiments of the present disclosure, the configuration information including the duration of the WUS may be generated, the WUS may be used to wake up the IoT UE, and the duration may be associated with the one or more
coverage parameters configured by the network device for the IoT UE. Then, the configuration information may be transmitted to the IoT UE, so that the IoT UE may acquire the WUS in accordance with the configuration information. As a result, it is able to associate the duration of the WUS with an existing coverage configuration, thereby to enable the UE in different coverage ranges to acquire the WUSs with different durations.

### BRIEF DESCRIPTION OF THE DRAWINGS

FIG. 1 is a flow chart of a WUS duration configuration method according to some embodiments of the present disclosure;
FIG. 2 is another flow chart of the WUS duration configuration method according to some embodiments of the present disclosure;
FIG. 3 is a schematic view showing a time interval reserved between a time point when the WUS duration is ended and a time point when the detection of a physical downlink control channel for paging is started according to some embodiments of the present disclosure;
FIG. 4 is another flow chart of the WUS duration configuration method according to some embodiments of the present disclosure; and
FIG. 5 is a schematic view showing a start time-domain resource position where the acquisition of the WUS is started and an end time-domain resource position where the WUS duration is ended according to some embodiments of the present disclosure.

### DETAILED DESCRIPTION

The present disclosure will be described hereinafter in conjunction with the drawings and embodiments. The following embodiments are for illustrative purposes only, but shall not be used to limit the scope of the present disclosure. Actually, the embodiments are provided so as to facilitate the understanding of the scope of the present disclosure.

In some embodiments of the present disclosure, a duration of a WUS may be associated with an existing coverage configuration. When a channel is repeated at relatively larger repetition times, it may take a longer time for an IoT UE to acquire the duration of the WUS, and when the channel is repeated at relatively smaller repetition times, it may take a shorter time for the IoT UE to acquire the duration of the WUS.

In addition, the IoT UE has a relatively low complexity, and after the acquisition of the WUS, it needs to take a certain time period for the IoT UE to perform subsequent signal processing. When the WUS indicating that there is a paging has indeed been detected, the IoT UE may activate the other circuits for the paging. Hence, there is a time interval between an end time-domain resource position where the WUS duration is ended and a time point when the detection of a paging signal is started. A value of the time interval may be configured by a base station, or specified in the standard.

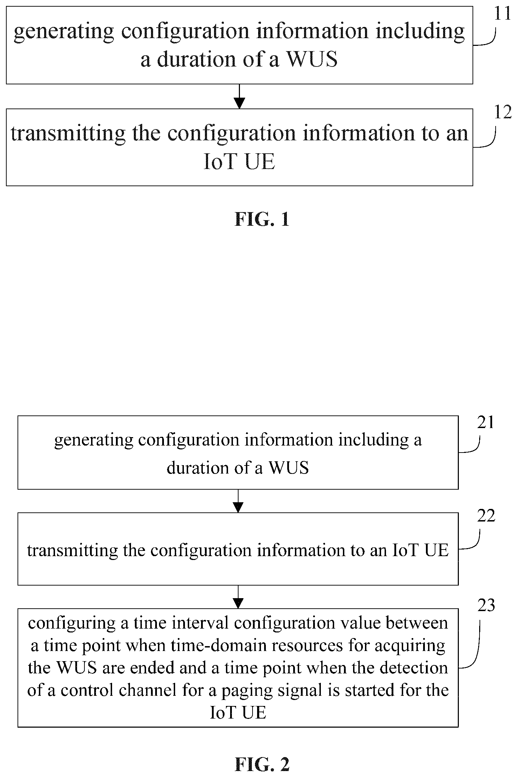

As shown in FIG. 1, the present disclosure provides in some embodiments a WUS duration configuration method for a network device which includes: Step 11 of generating configuration information including a duration of a WUS, the WUS being used to wake up an IoT UE, the duration being associated with one or more coverage parameters configured by the network device for the IoT UE; and Step 12 of transmitting the configuration information to the IoT UE.

According to the embodiments of the present disclosure, the configuration information including the duration of the WUS may be generated, the WUS may be used to wake up the IoT UE, and the duration may be associated with the one or more coverage parameters configured by the network device for the IoT UE. Then, the configuration information may be transmitted to the IoT UE, so that the IoT UE may acquire the WUS in accordance with the configuration information. As a result, it is able to associate the duration of the WUS with an existing coverage configuration, thereby to enable the UE in different coverage ranges to acquire the WUSs with different durations.

In the embodiments of the present disclosure, the duration may be linearly associated with the one or more coverage parameters configured by the network device for the IoT UE.

To be specific, the duration may be [A/M]+K, where [] represents a rounding operation including a rounding-up operation or a rounding-down operation, A represents the coverage parameter, K is equal to 0 or a predetermined value other than 0, M represents a predetermined constant.

The one or more coverage parameters may include maximum number of repetitions of a physical downlink control channel for paging, maximum number of repetitions of a data scheduling control channel, maximum number of repetitions of a control channel for transmitting Msg2 in a random access procedure, and/or maximum number of repetitions of a control channel for transmitting Msg4 in the random access procedure.

As shown in FIG. 2, the present disclosure further provides in some embodiments a WUS duration configuration method for a network device which includes: Step 21 of generating configuration information including a duration of a WUS, the WUS being used to wake up an IoT UE, the duration being associated with one or more coverage parameters configured by the network device for the IoT UE; Step 22 of transmitting the configuration information to the IoT UE; and Step 23 of configuring a time interval configuration value between a time point when time-domain resources for monitoring the WUS are ended and a time point when the detection of a physical downlink control channel for paging is started for the IoT UE.

To be specific, Step 23 may include: Step 231 of configuring the time interval configuration value between the time point when the time-domain resources for monitoring the WUS are ended and the time point when the detection of the control channel for the paging signal is started for the IoT UE through a broadcast message from the network device; or Step 232 of configuring the time interval configuration value between the time point when the time-domain resources for monitoring the WUS are ended and the time point when the detection of the control channel for the paging signal is started for the IoT UE through transmitting indication
information to the IoT UE, the indication information carrying the time interval configuration value for the IoT UE; or Step 233 of configuring the time interval configuration value between the time point when the time-domain resources for monitoring the WUS are ended and the time point when the detection of the control channel for the paging signal is started for the IoT UE in accordance with a preset time interval configuration value between the time point when the WUS duration is ended and the time point when the detection of the control channel for the paging signal is started.

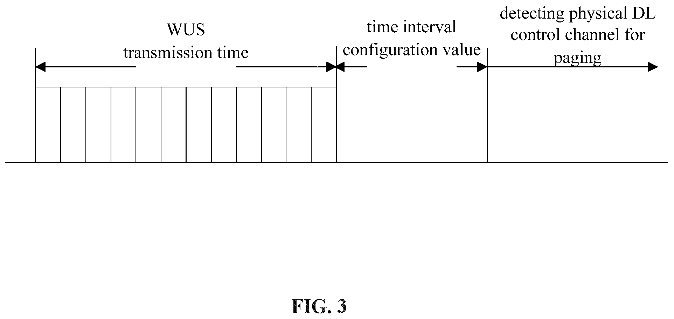

To be specific, as shown in FIG. 3, there is a time interval between the time point when the time-domain resources for monitoring the WUS are ended and the time point when the detection of the control channel for the paging signal is started. A specific value of the time interval may be broadcast by a base station and configured at a cell level, or configured by the base station at an UE level, or specified in the standard.

According to the embodiments of the present disclosure, the configuration information including the duration of the WUS may be generated, the WUS may be used to wake up the IoT UE, and the duration may be associated with the one or more coverage parameters configured by the network device for the IoT UE. Then, the configuration information may be transmitted to the IoT UE, and the time interval configuration value between the time point when the time-domain resources for monitoring the WUS are ended and the time point when the detection of the control channel for the paging signal is started may be configured for the IoT UE, so that the IoT UE may acquire the WUS in accordance with the configuration information. In addition, after the acquisition of the WUS, it needs to take a certain time period for the IoT UE to perform subsequent signal processing. When the WUS indicating that there is a paging has indeed been detected, the IoT UE may activate the other circuits for the paging. As a result, it is able to associate the duration of the WUS with an existing coverage configuration, thereby to enable the UE in different coverage ranges to acquire the WUSs with different durations.

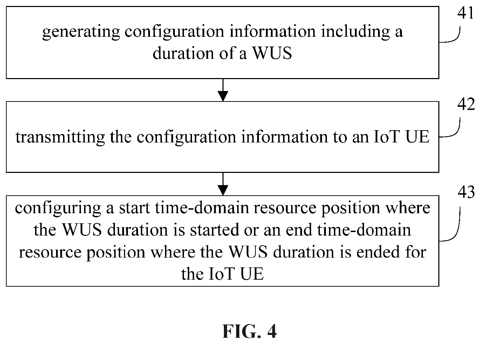

As shown in FIG. 4, the present disclosure further provides in some embodiments a WUS duration configuration method which includes: Step 41 of generating configuration information including a duration of a WUS, the WUS being used to wake up an IoT UE, the duration being associated with one or more coverage parameters configured by a network device for the IoT UE; Step 42 of transmitting the configuration information to the IoT UE; and Step 43 of configuring a start time-domain resource position where the acquisition of the WUS is started or an end time-domain resource position where the WUS duration is ended for the IoT UE.

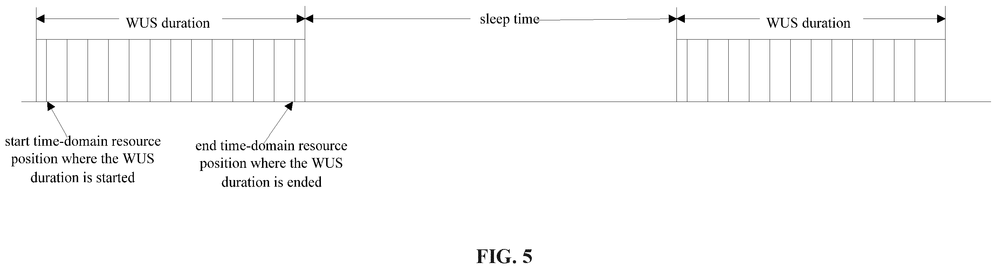

To be specific, as shown in FIG. 5, the start time-domain resource position where the acquisition of the WUS is started or the end time-domain resource position where the WUS duration is ended may be configured for the IoT UE through a broadcast message from the network device or in a pre-configuration manner. In some possible embodiments of the present disclosure, the IoT UE may start to acquire the WUS at the start time-domain resource position, or stop the acquisition of the WUS at the end time-domain resource position or stop the acquisition of the WUS at L symbols before the end time-domain resource position, where L may be configured by the network device through broadcasting or preset.

According to the embodiments of the present disclosure, the configuration information including the duration of the WUS may be generated, the WUS may be used to wake up the IoT UE, and the duration may be associated with the one or more coverage parameters configured by the network device for the IoT UE. Then, the configuration information may be transmitted to the IoT UE, and the start time-domain resource position where the acquisition of the WUS is started and the end time-domain resource position where the WUS duration is ended may be configured for the IoT UE, so that the IoT UE may acquire the WUS or stop the acquisition of the WUS in accordance with the configuration information. As a result, it is able for the IoT UE in different coverage ranges to acquire the WUSs with different durations.

As mentioned above, the WUSs with different durations may be configured for the UE, and each duration may be associated with the coverage parameter configured by the network device. In this way, in the case that a set of WUSs has been transmitted by the base station, it is able for the UE in different coverage ranges to acquire the WUSs with different durations.

The present disclosure further provides in some embodiments a network device, including: a processor configured to generate configuration information including a duration of a WUS, the WUS being used to wake up an IoT UE, the duration being associated with one or more coverage parameters configured by the network device for the IoT UE; and a transceiver configured to transmit the configuration information to the IoT UE.

In some possible embodiments of the present disclosure, the duration may be linearly associated with the one or more coverage parameters configured by the network device for the IoT UE.

In some possible embodiments of the present disclosure, the duration may be [A/M]+K, where [] represents a rounding operation including a rounding-up operation or a rounding-down operation, A represents the coverage parameter, K is equal to 0 or a predetermined value other than 0, M represents a predetermined constant.

In some possible embodiments of the present disclosure, the one or more coverage parameters may include maximum number of repetitions of a physical downlink control channel for paging, maximum number of repetitions of a data scheduling control channel, maximum number of repetitions of a control channel for transmitting Msg2 in a random access procedure, and/or maximum number of repetitions of a control channel for transmitting Msg4 in the random access procedure.

In some possible embodiments of the present disclosure, the transceiver is further configured to transmit the configuration information the IoT UE through transmitting indication information to the IoT UE.

In some possible embodiments of the present disclosure, the transceiver is further configured to configure a time interval configuration value between a time point when the WUS duration is ended and a time point when the detection of a physical downlink control channel for paging is started for the IoT UE.

**In** some possible embodiments of the present disclosure, the transceiver is further configured to: configure the time interval configuration value between the time point when the WUS duration is ended and the time point when the detection of the control channel for the paging signal is started for the IoT UE through a broadcast message from the network device; or configure the time interval configuration value between the time point when the WUS duration is ended and the time point when the detection of the control channel for the paging signal is started for the IoT UE through transmitting indication information to the IoT UE, the indication information carrying the time interval configuration value for the IoT UE; or configure the time interval configuration value between the time point when the WUS duration is ended and the time point when the detection of the control channel for the paging signal is started for the IoT UE in accordance with a preset time interval configuration value between the time point when the WUS duration is ended and the time point when the detection of the control channel for the paging signal is started.

**In** some possible embodiments of the present disclosure, the transceiver is further configured to configure a start time-domain resource position where the acquisition of the WUS is started or an end time-domain resource position where the WUS duration is ended for the IoT UE.

**In** some possible embodiments of the present disclosure, the transceiver is further configured to configure the start time-domain resource position where the acquisition of the WUS is started or the end time-domain resource position where the WUS duration is ended for the IoT UE through the broadcast message from the network device or in a pre-configuration manner.

In the embodiments of the present disclosure, the network device may be a device corresponding to the above-mentioned method, and it may be a base station or any other device at a network side. The implementation of the network device may refer to that of the method mentioned hereinabove, with a same technical effect.

The present disclosure further provides in some embodiments a WUS monitoring method for an IoT UE, including: receiving configuration information including a duration of a WUS from a network device, the WUS being used to wake up the IoT UE, the duration being associated with one or more coverage parameters configured by a network device for the IoT UE; and monitoring the WUS in accordance with the configuration information.

In some possible embodiments of the present disclosure, the duration may be linearly associated with the one or more coverage parameters configured by the network device for the IoT UE.

In some possible embodiments of the present disclosure, the duration may be [A/M]+K, where [] represents a rounding operation including a rounding-up operation or a rounding-down operation, A represents the coverage parameter, K is equal to 0 or a predetermined value other than 0, M represents a predetermined constant.

In some possible embodiments of the present disclosure, the one or more coverage parameters may include maximum number of repetitions of a physical downlink control channel for paging, maximum number of repetitions of a data scheduling control channel, maximum number of repetitions of a control channel for transmitting Msg2 in a random access procedure, and/or maximum number of repetitions of a control channel for transmitting Msg4 in the random access procedure.

In some possible embodiments of the present disclosure, the receiving the configuration information including the duration of the WUS from the network device may include acquiring the configuration information including the duration of the WUS through receiving indication information from the network device.

In some possible embodiments of the present disclosure, the WUS monitoring method may further include receiving a time interval configuration value between a time point when the WUS duration is ended and a time point when the detection of a physical downlink control channel for paging is started configured by the network device for the IoT UE.

In some possible embodiments of the present disclosure, the receiving the time interval configuration value between the time point when the WUS duration is ended and the time point when the detection of the control channel for the paging signal is started configured by the network device for the IoT UE may include receiving the time interval configuration value between the time point when the WUS duration is ended and the time point when the detection of the control channel for the paging signal is started configured for the IoT UE through receiving a broadcast message from the network device, or receiving indication information from the network device, or in accordance with a preset time interval configuration value between the time point when the WUS duration is ended and the time point when the detection of the control channel for the paging signal is started.

In some possible embodiments of the present disclosure, the WUS monitoring method may further include acquiring a start time-domain resource position where the acquisition of the WUS is started or an end time-domain resource position where the WUS duration is ended configured for the IoT UE.

In some possible embodiments of the present disclosure, the acquiring the start time-domain resource position where the acquisition of the WUS is started or the end time-domain resource position where the WUS duration is ended configured for the IoT UE may include acquiring the start time-domain resource position where the acquisition of the WUS is started or the end time-domain resource position where the WUS duration is ended configured for the IoT UE through the broadcast message from the network device or in a pre-configuration manner.

In some possible embodiments of the present disclosure, the WUS monitoring method may further include: monitoring the WUS from the start time-domain resource position; and/or stopping the acquisition of the WUS at the end time-domain resource position or at L symbols before the end time-domain resource position, where L is configured by the network device through broadcasting or preset.

According to the embodiments of the present disclosure, the UE may acquire the configuration information, and acquire the WUS in accordance with the configuration information. As a result, in the case that a set of WUSs have been transmitted by the base station, it is able for the UE in different coverage ranges to acquire the WUSs with different durations.

The present disclosure further provides in some embodiments a UE, including: a transceiver configured to: receive configuration information including a duration of a WUS from a network device, the WUS being used to wake up an IoT UE, the duration being associated with one or more coverage parameters configured by a network device for the IoT UE; and acquire the WUS in accordance with the configuration information.

In some possible embodiments of the present disclosure, the duration may be linearly associated with the one or more coverage parameters configured by the network device for the IoT UE.

In some possible embodiments of the present disclosure, the duration may be [A/M]+K, where [] represents a rounding operation including a rounding-up operation or a rounding-down operation, A represents the coverage parameter, K is equal to 0 or a predetermined value other than 0, M represents a predetermined constant.

In some possible embodiments of the present disclosure, the one or more coverage parameters may include maximum number of repetitions of a physical downlink control channel for paging, maximum number of repetitions of a data scheduling control channel, maximum number of repetitions of a control channel for transmitting Msg2 in a random access procedure, and/or maximum number of repetitions of a control channel for transmitting Msg4 in the random access procedure.

In some possible embodiments of the present disclosure, the transceiver is further configured to acquire the configuration information including the duration of the WUS through receiving indication information from the network device.

In some possible embodiments of the present disclosure, the transceiver is further configured to receive a time interval configuration value between a time point when the WUS duration is ended and a time point when the detection of a physical downlink control channel for paging is started configured by the network device for the IoT UE.

In some possible embodiments of the present disclosure, the transceiver is further configured to receive the time interval configuration value between the time point when the WUS duration is ended and the time point when the detection of the control channel for the paging signal is started configured for the IoT UE through receiving a broadcast message from the network device, or receiving indication information from the network device, or in accordance with a preset time interval configuration value between the time point when the WUS duration is ended and the time point when the detection of the control channel for the paging signal is started.

In some possible embodiments of the present disclosure, the transceiver is further configured to acquire a start time-domain resource position where the acquisition of the WUS is started or an end time-domain resource position where the WUS duration is ended configured for the IoT UE.

In some possible embodiments of the present disclosure, the transceiver is further configured to acquire the start time-domain resource position where the acquisition of the WUS is started or the end time-domain resource position where the WUS duration is ended configured for the IoT UE through the broadcast message from the network device or in a pre-configuration manner.

In some possible embodiments of the present disclosure, the transceiver is further configured to: acquire the WUS from the start time-domain resource position; and/or stop the acquisition of the WUS at the end time-domain resource position or at L symbols before the end time-domain resource position, where L is configured by the network device through broadcasting or preset.

In the embodiments of the present disclosure, the UE may be a device corresponding to the above-mentioned method for the UE, and the implementation of the UE may refer to that of the method mentioned hereinabove, with a same technical effect.

The present disclosure further provides in some embodiments a communication device, including a processor and a memory storing therein a computer program. The processor is configured to execute the computer program so as to implement the above-mentioned WUS duration configuration method or WUS monitoring method. The processor may be coupled to the memory via an interface or a bus. The communication device may be the above-mentioned network device, e.g., a base station, or the above-mentioned UE, e.g., an IoT UE.

The present disclosure further provides in some embodiments a computer-readable storage medium storing therein a computer program instruction. The computer program instruction is executed by a computer so as to implement the above-mentioned WUS duration configuration method or WUS monitoring method.

The computer-readable storage medium may be a volatile computer-readable storage medium or a non-volatile computer-readable storage medium, or a transient computer-readable storage medium or a non-transient computer-readable storage medium.

According to the embodiments of the present disclosure, the WUSs with different durations may be configured for the UE, and each duration may be associated with the coverage parameter configured by the network device. As a result, in the case that a set of WUSs have been transmitted by the base station, it is able for the UE in different coverage ranges to acquire the WUSs with different durations.

## Claims

1. A Wake-Up Signal, WUS, duration configuration method performed by a network device, the method comprising:
generating (11, 21, 41) configuration information comprising a duration of a WUS, the WUS being used to wake up an Internet of Things, IoT, User Equipment, UE, the duration being associated with one or more coverage parameters configured by a network device for the IoT UE; and
transmitting (12, 22, 42) the configuration information to the IoT UE,
**characterized in that** the duration is linearly associated with the one or more coverage parameters configured by the network device for the IoT UE,
wherein
the one or more coverage parameters comprise maximum number of repetitions of a control channel for transmitting Msg2 in a random access procedure, and/or maximum number of repetitions of a control channel for transmitting Msg4 in the random access procedure.

2. The WUS duration configuration method according to claim 1, wherein the duration is [A/M]+K, where [] represents a rounding operation comprising a rounding-up operation or a rounding-down operation, A represents the coverage parameter, K is equal to 0 or a predetermined value other than 0, M represents a predetermined constant.

3. The WUS duration configuration method according to any one of claims 1 to 2, wherein the one or more coverage parameters further comprise: maximum number of repetitions of a data scheduling control channel, or maximum number of repetitions of a physical downlink control channel for paging.

4. The WUS duration configuration method according to claim 1, wherein the transmitting (12, 22, 42) the configuration information to the IoT UE comprises:
transmitting the configuration information to the IoT UE through transmitting indication information to the IoT UE.

5. The WUS duration configuration method according to claim 1,
wherein the configuring (23) the time interval configuration value between the time point when the WUS duration is ended and the time point when the detection of the control channel for the paging signal is started for the IoT UE comprises:
configuring the time interval configuration value between the time point when the WUS duration is ended and the time point when the detection of the control channel for the paging signal is started for the IoT UE through a broadcast message from the network device; or
configuring the time interval configuration value between the time point when the WUS duration is ended and the time point when the detection of the control channel for the paging signal is started for the IoT UE through transmitting indication information to the IoT UE, the indication information carrying the time interval configuration value for the IoT UE; or
configuring the time interval configuration value between the time point when the WUS duration is ended and the time point when the detection of the control channel for the paging signal is started for the IoT UE in accordance with a preset time interval configuration value between the time point when the WUS duration is ended and the time point when the detection of the control channel for the paging signal is started.

6. The WUS duration configuration method according to claim 1, further comprising:
configuring (43) a start time-domain resource position where the acquisition of the WUS is started or an end time-domain resource position where the WUS duration is ended for the IoT UE,
wherein the configuring (43) the start time-domain resource position where the acquisition of the WUS is started or the end time-domain resource position where the WUS duration is ended for the IoT UE comprises:
configuring the start time-domain resource position where the acquisition of the WUS is started or the end time-domain resource position where the WUS duration is ended for the IoT UE through the broadcast message from the network device or in a pre-configuration manner.

7. A network device, comprising:
a processor configured to generate (11, 21, 41) configuration information comprising a duration of a WUS, the WUS being used to wake up an IoT UE, the duration being associated with one or more coverage parameters configured by a network device for the IoT UE; and
a transceiver configured to transmit (12, 22, 42) the configuration information to the IoT UE,
**characterized in that** the duration is linearly associated with the one or more coverage parameters configured by the network device for the IoT UE,
wherein
the one or more coverage parameters comprise maximum number of repetitions of a control channel for transmitting Msg2 in a random access procedure, and/or maximum number of repetitions of a control channel for transmitting Msg4 in the random access procedure.

8. A Wake-Up Signal, WUS, monitoring method performed by a User Equipment, UE, the method comprising:
receiving configuration information comprising a duration of a WUS from a network device, the WUS being used to wake up an Internet of Things, IoT, User Equipment, UE, the duration being associated with one or more coverage parameters configured by a network device for the IoT UE; and
monitoring the WUS in accordance with the configuration information,
**characterized in that** the duration is linearly associated with the one or more coverage parameters configured by the network device for the IoT UE,
wherein
the one or more coverage parameters comprise maximum number of repetitions of a control channel for transmitting Msg2 in a random access procedure, and/or maximum number of repetitions of a control channel for transmitting Msg4 in the random access procedure.

9. The WUS monitoring method according to claim 8, wherein the duration is [A/M]+K, where [] represents a rounding operation comprising a rounding-up operation or a rounding-down operation, A represents the coverage parameter, K is equal to 0 or a predetermined value other than 0, M represents a predetermined constant.

10. The WUS monitoring method according to any one of claims 8 to 9, wherein the one or more coverage parameters further comprise: maximum number of repetitions of a data scheduling control channel, or maximum number of repetitions of a physical downlink control channel for paging.

11. The WUS monitoring method according to claim 8, wherein the receiving the configuration information comprising the duration of the WUS from the network device comprises:
acquiring the configuration information comprising the duration of the WUS through receiving indication information from the network device.

12. The WUS monitoring method according to claim 8,
wherein the receiving the time interval configuration value between the time point when the WUS duration is ended and the time point when the detection of the control channel for the paging signal is started, wherein the time interval value is configured by the network device for the IoT UE comprises:
receiving the time interval configuration value between the time point when the WUS duration is ended and the time point when the detection of the control channel for the paging signal is started configured for the IoT UE through receiving a broadcast message from the network device, or receiving indication information from the network device, or in accordance with a preset time interval configuration value between the time point when the WUS duration is ended and the time point when the detection of the control channel for the paging signal is started.

13. The WUS monitoring method according to claim 8, further comprising:
acquiring a start time-domain resource position where the acquisition of the WUS is started or an end time-domain resource position where the WUS duration is ended configured for the IoT UE,
wherein the acquiring the start time-domain resource position where the acquisition of the WUS is started or the end time-domain resource position where the WUS duration is ended configured for the IoT UE comprises:
acquiring the start time-domain resource position where the acquisition of the WUS is started or the end time-domain resource position where the WUS duration is ended configured for the IoT UE through the broadcast message from the network device or in a pre-configuration manner.

14. The WUS monitoring method according to claim 13, further comprising:
monitoring the WUS from the start time-domain resource position; and/or
stopping the acquisition of the WUS at the end time-domain resource position or at L symbols before the end time-domain resource position, where L is configured by the network device through broadcasting or preset.

15. A User Equipment, UE, comprising:
a transceiver configured to: receive configuration information comprising a duration of a WUS from a network device, the WUS being used to wake up an IoT UE, the duration being associated with one or more coverage parameters configured by a network device for the IoT UE; and acquire the WUS in accordance with the configuration information,
**characterized in that** the duration is linearly associated with the one or more coverage parameters configured by the network device for the IoT UE,
wherein
the one or more coverage parameters comprise maximum number of repetitions of a control channel for transmitting Msg2 in a random access procedure, and/or maximum number of repetitions of a control channel for transmitting Msg4 in the random access procedure.

## Patentansprüche

1. Verfahren zur Konfiguration der Dauer eines Wecksignals, das von einem Netzwerkgerät durchgeführt wird, wobei das Verfahren umfasst:
Erzeugen (11, 21, 41) von Konfigurationsinformation, die eine Dauer eines Wecksignals umfasst, wobei das Wecksignal zum Wecken eines Internet-of-Things-(IoT)-Benutzergeräts verwendet wird und die Dauer mit einem oder mehreren Abdeckungsparametern verknüpft ist, die von einem Netzwerkgerät für das IoT-Benutzergerät konfiguriert werden; und
Senden (12, 22, 42) der Konfigurationsinformation an das IoT-Benutzergerät,
**dadurch gekennzeichnet, dass** die Dauer linear mit den ein oder mehreren von dem Netzwerkgerät für das IoT-Benutzergerät konfigurierten Abdeckungsparametern verknüpft ist, wobei
die ein oder mehreren Abdeckungsparameter die maximale Anzahl von Wiederholungen eines Steuerkanals zum Senden von Msg2 in einem wahlfreien Zugriffsverfahren und/oder die maximale Anzahl von Wiederholungen eines Steuerkanals zum Senden von Msg4 in dem wahlfreien Zugriffsverfahren umfassen.

2. Verfahren zur Konfiguration der Wecksignaldauer nach Anspruch 1, bei dem die Dauer [A/M]+K ist, wobei [] eine Rundungsoperation darstellt, die eine Aufrundungsoperation oder eine Abrundungsoperation umfasst, A den Abdeckungsparameter darstellt, K gleich 0 oder einem vorgegebenen Wert ungleich 0 ist und M eine vorgegebene Konstante darstellt.

3. Verfahren zur Konfiguration der Wecksignaldauer nach einem der Ansprüche 1 bis 2, wobei die ein oder mehreren Abdeckungsparameter ferner die maximale Anzahl von Wiederholungen eines Datenplanungssteuerkanals oder die maximale Anzahl von Wiederholungen eines physikalischen Downlink-Steuerkanals für das Paging umfassen.

4. Verfahren zur Konfiguration der Wecksignaldauer nach Anspruch 1, bei dem das Senden (12, 22, 42) der Konfigurationsinformation an das IoT-Benutzergerät umfasst:
Senden der Konfigurationsinformation an das IoT-Benutzergerät durch Senden von Anzeigeinformation an das IoT-Benutzergerät.

5. Verfahren zur Konfiguration der Wecksignaldauer nach Anspruch 1, bei dem das Konfigurieren (23) des Zeitintervall-Konfigurationswerts zwischen dem Zeitpunkt, zu dem die Wecksignaldauer endet, und dem Zeitpunkt, zu dem die Erfassung des Steuerkanals für das Paging-Signal für das IoT-Benutzergerät gestartet wird, umfasst:
Konfigurieren des Zeitintervall-Konfigurationswerts zwischen dem Zeitpunkt, zu dem die Wecksignaldauer endet, und dem Zeitpunkt, zu dem die Erfassung des Steuerkanals für das Paging-Signal für das IoT-Benutzergerät gestartet wird, durch eine Broadcast-Nachricht vom Netzwerkgerät; oder
Konfigurieren des Zeitintervall-Konfigurationswerts zwischen dem Zeitpunkt, zu dem die Wecksignaldauer endet, und dem Zeitpunkt, zu dem die Erfassung des Steuerkanals für das Paging-Signal für das IoT-Benutzergerät gestartet wird, durch Senden von Anzeigeinformation an das IoT-Benutzergerät, wobei die Anzeigeinformation den Zeitintervall-Konfigurationswert für das IoT-Benutzergerät enthält; oder
Konfigurieren des Zeitintervall-Konfigurationswerts zwischen dem Zeitpunkt, zu dem die Wecksignaldauer endet, und dem Zeitpunkt, zu dem die Erfassung des Steuerkanals für das Paging-Signal für das IoT-Benutzergerät gemäß einem voreingestellten Zeitintervall-Konfigurationswert zwischen dem Zeitpunkt, zu dem die Wecksignaldauer endet, und dem Zeitpunkt, zu dem die Erkennung des Steuerkanals für das Paging-Signal beginnt, gestartet wird.

6. Verfahren zur Konfiguration der Wecksignaldauer nach Anspruch 1, das ferner umfasst:
Konfigurieren (43) einer Startzeitbereichsressourcenposition, an der die Erfassung des Wecksignals gestartet wird, oder einer Endzeitbereichsressourcenposition, an der die Wecksignaldauer für das IoT-Benutzergerät beendet wird,
wobei das Konfigurieren (43) der Startzeitbereichsressourcenposition, an der die Erfassung des Wecksignals gestartet wird, oder der Endzeitbereichsressourcenposition, an der die Wecksignaldauer für das IoT-Benutzergerät beendet wird, umfasst:
Konfigurieren der Startzeitbereichsressourcenposition, an der die Erfassung des Wecksignals gestartet wird, oder der Endzeitbereichsressourcenposition, an der die Wecksignaldauer für das IoT-Benutzergerät beendet wird, durch die Broadcast-Nachricht vom Netzwerkgerät oder in einer Vorkonfigurationsweise.

7. Netzwerkgerät, umfassend:
einen Prozessor, der konfiguriert ist, um (11, 21, 41) Konfigurationsinformation zu erzeugen, die eine Dauer eines Wecksignals umfasst, wobei das Wecksignal zum Aufwecken eines IoT-Benutzergeräts verwendet wird und die Dauer mit einem oder mehreren Abdeckungsparametern verknüpft ist, die von einem Netzwerkgerät für das IoT-Benutzergerät konfiguriert werden; und
einen Transceiver, der konfiguriert ist, um (12, 22, 42) die Konfigurationsinformation an das IoT-Benutzergerät zu senden,
**dadurch gekennzeichnet, dass** die Dauer linear mit den von dem Netzwerkgerät für das IoT-Benutzergerät konfigurierten ein oder mehreren Abdeckungsparametern verknüpft ist,
wobei die ein oder mehreren Abdeckungsparameter die maximale Anzahl von Wiederholungen eines Steuerkanals zum Senden von Msg2 in einem wahlfreien Zugriffsverfahren und/oder die maximale Anzahl von Wiederholungen eines Steuerkanals zum Senden von Msg4 in dem wahlfreien Zugriffsverfahren umfassen.

8. Verfahren zur Überwachung eines Wecksignals durch ein Benutzergerät, wobei das Verfahren umfasst:
Empfangen von Konfigurationsinformation, die eine Dauer eines Wecksignals umfasst, von einem Netzwerkgerät, wobei das Wecksignal zum Wecken eines IoT-Benutzergeräts verwendet wird, und die Dauer mit einem oder mehreren von einem Netzwerkgerät für das IoT-Benutzergerät konfigurierten Abdeckungsparametern verknüpft ist; und
Überwachen des Wecksignals gemäß der Konfigurationsinformation,
**dadurch gekennzeichnet, dass** die Dauer linear mit den ein oder mehreren von dem Netzwerkgerät für das IoT-Benutzergerät konfigurierten Abdeckungsparametern verknüpft ist,
wobei die ein oder mehreren Abdeckungsparameter die maximale Anzahl von Wiederholungen eines Steuerkanals zum Senden von Msg2 in einem wahlfreien Zugriffsverfahren und/oder die maximale Anzahl von Wiederholungen eines Steuerkanals zum Senden von Msg4 im wahlfreien Zugriffsverfahren umfassen.

9. Wecksignal-Überwachungsverfahren nach Anspruch 8, bei dem die Dauer [A/M]+K ist, wobei [] eine Rundungsoperation darstellt, die eine Aufrundungsoperation oder eine Abrundungsoperation umfasst, A den Abdeckungsparameter darstellt, K gleich 0 oder einem vorgegebenen Wert ungleich 0 ist und M eine vorgegebene Konstante darstellt.

10. Wecksignal-Überwachungsverfahren nach einem der Ansprüche 8 bis 9, bei dem die ein oder mehreren Abdeckungsparameter ferner eine maximale Anzahl von Wiederholungen eines Datenplanungs-Steuerkanals oder maximale Anzahl von Wiederholungen eines physikalischen Abwärtsstrecken-Steuerkanals für das Paging umfassen.

11. Wecksignal-Überwachungsverfahren nach Anspruch 8, bei dem das Empfangen der Konfigurationsinformation, die die Dauer des Wecksignals umfasst, von dem Netzwerkgerät umfasst:
Erfassen der Konfigurationsinformation, die die Dauer des Wecksignals umfasst, durch Empfangen von Anzeigeinformation von dem Netzwerkgerät.

12. Wecksignal-Überwachungsverfahren nach Anspruch 8,
bei dem das Empfangen des Zeitintervall-Konfigurationswerts zwischen dem Zeitpunkt, zu dem die Wecksignaldauer endet, und dem Zeitpunkt, zu dem die Erfassung des Steuerkanals für das Paging-Signal beginnt, wobei der Zeitintervallwert durch das Netzwerkgerät für das IoT-Benutzergerät konfiguriert wird, umfasst:
Empfangen des Zeitintervall-Konfigurationswerts zwischen dem Zeitpunkt, zu dem die Wecksignaldauer endet, und dem Zeitpunkt, zu dem die Erfassung des Steuerkanals für das Paging-Signal für das IoT-Benutzergerät konfiguriert beginnt, durch Empfangen einer Broadcast-Nachricht von dem Netzwerkgerät oder Empfangen von Anzeigeinformation von dem Netzwerkgerät, oder gemäß einem voreingestellten Zeitintervall-Konfigurationswert zwischen dem Zeitpunkt, zu dem die Wecksignaldauer endet, und dem Zeitpunkt, zu dem die Erfassung des Steuerkanals für das Paging-Signal beginnt.

13. Wecksignal-Überwachungsverfahren nach Anspruch 8, das ferner umfasst:
Erfassen einer Startzeitbereichsressourcenposition, an der die Erfassung des Wecksignals gestartet wird, oder einer Endzeitbereichs-Ressourcenposition, an der die Wecksignaldauer für das IoT-Benutzergerät konfiguriert endet,
wobei das Erfassen der Startzeitbereichsressourcenposition, an der die Erfassung des Wecksignals gestartet wird, oder der Endzeitbereichsressourcenposition, an der die Wecksignaldauer für das IoT-Benutzergerät konfiguriert endet, umfasst:
Erfassen der Startzeitbereichsressourcenposition, an der die Erfassung des Wecksignals gestartet wird, oder der Endzeitbereichsressourcenposition, an der die Wecksignaldauer für das IoT-Benutzergerät konfiguriert endet, durch die Broadcast-Nachricht vom Netzwerkgerät oder in einer Vorkonfigurationsweise.

14. Wecksignal-Überwachungsverfahren nach Anspruch 13, das ferner umfasst:
Überwachen des Wecksignals ab der Startzeitbereichsressourcenposition; und/oder
Beenden der Erfassung des Wecksignals an der Endzeitbereichsressourcenposition oder L Symbole vor der Endzeitbereichsressourcenposition, wobei L durch das Netzwerkgerät durch Broadcast oder Voreinstellung konfiguriert ist.

15. Benutzergerät (UE), umfassend:
einen Transceiver, der konfiguriert ist, um: Konfigurationsinformation, die eine Dauer eines Wecksignals umfassen, von einem Netzwerkgerät zu empfangen, wobei das Wecksignal zum Aufwecken eines IoT-Benutzergeräts verwendet wird und die Dauer mit einem oder mehreren Abdeckungsparametern verknüpft ist, die von einem Netzwerkgerät für das IoT-Benutzergerät konfiguriert werden; und zum Erfassen des Wecksignals gemäß den Konfigurationsinformationen,
**dadurch gekennzeichnet, dass** die Dauer linear mit den ein oder mehreren von dem Netzwerkgerät für das IoT-UE konfigurierten Abdeckungsparametern verknüpft ist,
wobei die ein oder mehreren Abdeckungsparameter die maximale Anzahl von Wiederholungen eines Steuerkanals zum Senden von Msg2 in einem wahlfreien Zugriffsverfahren und/oder die maximale Anzahl von Wiederholungen eines Steuerkanals zum Senden von Msg4 in dem wahlfreien Zugriffsverfahren umfassen.

## Revendications

1. Procédé de configuration de durée de signal de réveil, WUS, effectué par un dispositif de réseau, le procédé comprenant les étapes prévoyant de :
générer (11, 21, 41) des informations de configuration comprenant une durée d'un WUS, le WUS étant utilisé pour réveiller un équipement utilisateur, UE, d'Internet des objets, IoT, la durée étant associée à un ou plusieurs paramètres de couverture configurés par un dispositif de réseau pour l'UE d'IoT ; et
transmettre (12, 22, 42) les informations de configuration à l'UE d'IoT,
**caractérisé en ce que**
la durée est associée linéairement aux un ou plusieurs paramètres de couverture configurés par le dispositif de réseau pour l'UE d'IoT,
dans lequel les un ou plusieurs paramètres de couverture comprennent un nombre maximum de répétitions d'un canal de commande pour transmettre Msg2 dans une procédure d'accès aléatoire, et/ou un nombre maximum de répétitions d'un canal de commande pour transmettre Msg4 dans la procédure d'accès aléatoire.

2. Procédé de configuration de durée de WUS selon la revendication 1, dans lequel la durée est [A/M]+K, où [] représente une opération d'arrondi comprenant une opération d'arrondi vers le haut ou une opération d'arrondi vers le bas, A représente le paramètre de couverture, K est égal à 0 ou une valeur prédéterminée autre que 0, M représente une constante prédéterminée.

3. Procédé de configuration de durée de WUS selon l'une quelconque des revendications 1 à 2, dans lequel les un ou plusieurs paramètres de couverture comprennent en outre : un nombre maximum de répétitions d'un canal de commande d'ordonnancement de données, ou un nombre maximum de répétitions d'un canal de commande de liaison descendante physique pour radiomessagerie.

4. Procédé de configuration de durée de WUS selon la revendication 1, dans lequel la transmission (12, 22, 42) des informations de configuration à l'UE d'IoT comprend l'étape prévoyant de :
transmettre les informations de configuration à l'UE d'IoT en transmettant les informations d'indication à l'UE d'IoT.

5. Procédé de configuration de durée de WUS selon la revendication 1,
dans lequel la configuration (23) de la valeur de configuration d'intervalle de temps entre le moment où la durée de WUS est terminée et le moment où la détection du canal de commande pour le signal de radiomessagerie est démarrée pour l'UE d'IoT comprend les étapes prévoyant de :
configurer la valeur de configuration d'intervalle de temps entre le moment où la durée de WUS est terminée et le moment où la détection du canal de commande pour le signal de radiomessagerie est démarrée pour l'UE d'IoT par l'intermédiaire d'un message de diffusion provenant du dispositif de réseau ; ou
configurer la valeur de configuration d'intervalle de temps entre le moment où la durée de WUS est terminée et le moment où la détection du canal de commande pour le signal de radiomessagerie est démarrée pour l'UE d'IoT en transmettant des informations d'indication à l'UE d'IoT, les informations d'indication portant la valeur de configuration d'intervalle de temps pour l'UE d'IoT ; ou
configurer la valeur de configuration d'intervalle de temps entre le moment où la durée de WUS est terminée et le moment où la détection du canal de commande pour le signal de radiomessagerie est démarrée pour l'UE d'IoT, conformément à une valeur de configuration d'intervalle de temps prédéfinie, entre le moment où la durée de WUS est terminée et le moment où la détection du canal de commande pour le signal de radiomessagerie est démarrée.

6. Procédé de configuration de durée de WUS selon la revendication 1, comprenant en outre l'étape prévoyant de :
configurer (43) une position de ressource de domaine temporel de démarrage où l'acquisition du WUS est démarrées ou une position de ressource de domaine temporel de fin où la durée de WUS est terminée pour l'UE d'IoT,
dans lequel la configuration (43) de la position de ressource de domaine temporel de démarrage où l'acquisition du WUS est démarrées ou de la position de ressource de domaine temporel de fin où la durée du WUS est terminée pour l'UE d'IoT comprend l'étape prévoyant de :
configurer la position de ressource de domaine temporel de démarrage où l'acquisition du WUS est démarrée ou la position de ressource de domaine temporel de fin où la durée de WUS est terminée pour l'UE d'IoT par l'intermédiaire du message de diffusion provenant du dispositif de réseau ou à la manière d'une pré-configuration.

7. Dispositif de réseau, comprenant :
un processeur configuré pour générer (11, 21, 41) des informations de configuration comprenant une durée d'un WUS, le WUS étant utilisé pour réveiller un UE d'IoT, la durée étant associée à un ou plusieurs paramètres de couverture configurés par un dispositif de réseau pour l'UE d'IoT ; et
un émetteur-récepteur configuré pour transmettre (12, 22, 42) les informations de configuration à l'UE d'IoT,
**caractérisé en ce que**
la durée est associée linéairement aux un ou plusieurs paramètres de couverture configuré par le dispositif de réseau pour l'UE d'IoT,
dans lequel les un ou plusieurs paramètres de couverture comprennent un nombre maximum de répétitions d'un canal de commande pour transmettre Msg2 dans une procédure d'accès aléatoire, et/ou un nombre maximum de répétitions d'un canal de commande pour transmettre Msg4 dans la procédure d'accès aléatoire.

8. Procédé de surveillance d'un signal de réveil, WUS, effectué par un équipement utilisateur, UE, le procédé comprenant les étapes prévoyant de :
recevoir des informations de configuration comprenant une durée d'une WUS en provenance d'un dispositif de réseau, le WUS étant utilisé pour réveiller un équipement utilisateur, UE, d'Internet des objets, IoT, la durée étant associée à un ou plusieurs paramètres de couverture configurés par un dispositif de réseau pour l'UE d'IoT ; et
surveiller le WUS conformément aux informations de configuration,
**caractérisé en ce que**
la durée est associée linéairement aux un ou plusieurs paramètres de couverture configuré par le dispositif de réseau pour l'UE d'IoT,
dans lequel les un ou plusieurs paramètres de couverture comprennent un nombre maximum de répétitions d'un canal de commande pour transmettre Msg2 dans une procédure d'accès aléatoire, et/ou un nombre maximum de répétitions d'un canal de commande pour transmettre Msg4 dans la procédure d'accès aléatoire.

9. Procédé de surveillance de WUS selon la revendication 8, dans lequel la durée est [A/M]+K, où [] représente une opération d'arrondi comprenant une opération d'arrondi vers le haut ou une opération d'arrondi vers le bas, A représente le paramètre de couverture, K est égal à 0 ou une valeur prédéterminée autre que 0, M représente une constante prédéterminée.

10. Procédé de surveillance de WUS selon l'une quelconque des revendications 8 à 9, dans lequel les un ou plusieurs paramètres de couverture comprennent en outre : un nombre maximum de répétitions d'un canal de commande d'ordonnancement de données, ou un nombre maximum de répétitions d'un canal de commande de liaison descendante physique pour radiomessagerie.

11. Procédé de surveillance de WUS selon la revendication 8, dans lequel la réception des informations de configuration comprenant la durée du WUS en provenance du dispositif de réseau comprend l'étape prévoyant de :
acquérir les informations de configuration comprenant la durée du WUS en recevant des informations d'indication en provenance du dispositif de réseau.

12. Procédé de surveillance de WUS selon la revendication 8,
dans lequel la réception de la valeur de configuration d'intervalle de temps entre le moment où la durée WUS est terminée et le moment où la détection du canal de commande pour le signal de radiomessagerie est démarrée, dans lequel la valeur d'intervalle de temps est configurée par le dispositif de réseau pour l'UE d'IoT, comprend l'étape prévoyant de :
recevoir la valeur de configuration d'intervalle de temps entre le moment où la durée de WUS est terminée et le moment où la détection du canal de commande pour le signal de radiomessagerie est démarrée configurée pour l'UE d'IoT par la réception d'un message de diffusion provenant du dispositif de réseau, ou recevoir des informations d'indication en provenance du dispositif de réseau, ou conformément à une valeur de configuration d'intervalle de temps prédéfinie entre le moment où la durée WUS est terminée et le moment où la détection du canal de commande pour le signal de radiomessagerie est démarrée.

13. Procédé de surveillance de WUS selon la revendication 8, comprenant en outre l'étape prévoyant de :
acquérir une position de ressource de domaine temporel de démarrage où l'acquisition du WUS est démarrées ou une position de ressource de domaine temporel de fin où la durée de WUS est terminée, configurée pour l'UE d'IoT,
dans lequel l'acquisition de la position de ressource de domaine temporel de démarrage où l'acquisition du WUS est démarrées ou de la position de ressource de domaine temporel de fin où la durée du WUS est terminée, configurée pour l'UE d'IoT comprend l'étape prévoyant de :
acquérir la position de ressource de domaine temporel de démarrage où l'acquisition du WUS est démarrée ou la position de ressource de domaine temporel de fin où la durée de WUS est terminée, configurée pour l'UE d'IoT par l'intermédiaire du message de diffusion provenant du dispositif de réseau ou à la manière d'une préconfiguration.

14. Procédé de surveillance de WUS selon la revendication 13, comprenant en outre l'étape prévoyant de :
surveiller le WUS à partir de la position de ressource de domaine temporel de démarrage ; et/ou
arrêter l'acquisition du WUS à la position de ressource de domaine temporel de fin ou à L symboles avant la position de ressource de domaine temporel de fin, où L est configuré par le dispositif de réseau par diffusion ou préréglage.

15. Équipement utilisateur, UE, comprenant :
un émetteur-récepteur configuré pour : recevoir des informations de configuration comprenant une durée d'un WUS provenant d'un dispositif de réseau, le WUS étant utilisé pour réveiller un UE d'IoT, la durée étant associée à un ou plusieurs paramètres de couverture configurés par un dispositif de réseau pour l'UE d'IoT ; et acquérir le WUS conformément aux informations de configuration,
**caractérisé en ce que** la durée est associée linéairement aux un ou plusieurs paramètres de couverture configurés par le dispositif de réseau pour l'UE d'IoT,
dans lequel les un ou plusieurs paramètres de couverture comprennent un nombre maximum de répétitions d'un canal de commande pour transmettre Msg2 dans une procédure d'accès aléatoire, et/ou un nombre maximum de répétitions d'un canal de commande pour transmettre Msg4 dans la procédure d'accès aléatoire.
